# EUROPEAN PATENT APPLICATION

(11) **EP 2 843 726 A1**
(43) Date of publication of application: **04.03.2015**
(21) Application number: 14180135.7
(22) Date of filing: 07.08.2014
(51) Int. Cl.: H01M 2/08, H01M 8/02

(54) **Battery gasket based on a polyamide composition**

(30) Priority: 29.08.2013 FR 1358248
(71) Applicant: ARKEMA FRANCE, 92700 Colombes (FR)
(72) Inventor: Pineau, Quentin, 27000 Evreux (FR); Dang, Patrick, 27300 Saint-Leger-de-Rotes (FR); Li, Zhenzhong, Jiangsu 215-613 PR (CN)

(57) **Abstract**

The invention relates to a gasket for a battery, wherein the gasket is made from a polyamide composition comprising at least 70 wt.% of a polyamide X.Y, wherein X and Y represent respective residues from the condensation of an aliphatic diamine comprising 4 to 18 carbon atoms, and preferably 5 to 12 carbon atoms, with a (cyclo)aliphatic diacid comprising 10 to 18 carbon atoms, and wherein the polyamide composition further comprises a nucleating agent.

## Description

### TECHNICAL FIELD

The present invention relates to a battery gasket based on a polyamide composition as well as to a process for making same.

### TECHNICAL BACKGROUND

Electric batteries such as common consumer batteries for household use comprise a gasket for sealing the opening through which the electrolyte is introduced during the manufacturing process.

This gasket must have an appropriate mechanical flexibility and provide a required tightness. It is known to use a polyamide such as PA 6.12 as a gasket material.

Battery gaskets are generally manufactured using an injection molding process, which makes it possible to achieve mass production.

There is still a need to achieve a faster manufacturing of battery gaskets, without degrading the mechanical properties of said battery gaskets.

### SUMMARY OF THE INVENTION

It is a first object of the invention to provide a gasket for a battery, wherein the gasket is made from a polyamide composition comprising at least 70 wt.% of a polyamide X.Y, wherein X and Y represent respective residues from the condensation of an aliphatic diamine comprising 4 to 18 carbon atoms, and preferably 5 to 12 carbon atoms, with a (cyclo)aliphatic diacid comprising 10 to 18 carbon atoms, and wherein the polyamide composition further comprises a nucleating agent.

According to one embodiment, X + Y > 12.

According to one embodiment, X is an aliphatic diamine comprising 7 to 18 carbon atoms,

According to one embodiment, the polyamide X.Y is polyamide 6.10, 6.12 or polyamide 10.12.

According to one embodiment, the polyamide composition further comprises a release agent, which is preferably an amorphous wax.

By release agent is meant without being limited to, long-chain carboxylic acids, and their soaps, esters or amides, and other materials such as polar or nonpolar polyethylene waxes.

According to one embodiment, the polyamide composition comprises at least 75 wt.%, preferably at least 80 wt.% or at least 85 wt.% or at least 90 wt.% or at least 95 wt.% or at least 98 wt.% of the polyamide X.Y.

According to one embodiment, the nucleating agent is selected from:
- an inorganic nucleating agent such as *e.g.* a metal oxide, metallic particles, silica, alumina, clay or talc;
- an organic nucleating agent such as an additional polyamide having a melting temperature (Tf₂) above the melting temperature (Tf₁) of the polyamide PA X.Y to be nucleated, in particular a melting temperature Tf₂ > Tf₁ + 20°C, PA 6.6 or polyphtalamides being preferred; or
- a mixture of the above.

According to one embodiment, the nucleating agent comprises talc or consists of talc.

It must be noted that talc in the present invention is not used as a filler but only as a nucleating agent.

According to one embodiment, the nucleating agent does not contain any ethylene-acrylic acid calcium ionomer or any ethylene-acrylic acid copolymer.

According to one embodiment, the amount of talc in the polyamide composition is from 0.05 wt.% to 1 wt.%, preferably from 0.1 wt.% to 0.5 wt.%, and more preferably from 0.1 to 0.3 wt.%, in particular approximately 0.2%.

It is another object of the invention to provide a process of making a gasket for a battery, comprising the injection molding of a polyamide composition comprising at least 70 wt.% of a polyamide X.Y, wherein X and Y represent respective residues from the condensation of an aliphatic diamine comprising 4 to 18 carbon atoms, and preferably 5 to 12 carbon atoms, with a (cyclo)aliphatic diacid comprising 10 to 18 carbon atoms, and wherein the polyamide composition further comprises a nucleating agent, preferably talc.

According to one embodiment, the polyamide composition is as described with respect to the first object of the invention.

It is another object of the invention to provide the use of a nucleating agent, the nucleating agent preferably being talc, for accelerating the crystallization of a polyamide composition in a process of making a gasket for a battery, wherein the polyamide composition comprises at least 70 wt.% of a polyamide X.Y, X and Y representing respective residues from the condensation of an aliphatic diamine comprising 4 to 18 carbon atoms, and preferably 5 to 12 carbon atoms, with a (cyclo)aliphatic diacid comprising 10 to 18 carbon atoms.

According to one embodiment, the polyamide composition is as described with respect to the first object of the invention.

It is another object of the invention to provide a battery comprising the gasket of the first object of the invention.

According to one embodiment, the battery is an alkaline battery.

The present invention makes it possible to overcome the drawbacks of the prior art. In particular the invention makes it possible to achieve a faster manufacturing of battery gaskets, while maintaining the mechanical properties of said battery gaskets - or even improving said mechanical properties, according to some embodiments.

This is achieved by using a nucleating agent such as talc or the like in the polyamide composition used for making the battery gaskets. It has been found that the use of said nucleating agent, in particular talc, significantly accelerates the crystallization of the polyamide composition (and therefore significantly accelerates the injection molding process) while preserving (or even improving) the mechanical properties of the gaskets.

### BRIEF DESCRIPTION OF THE DRAWINGS

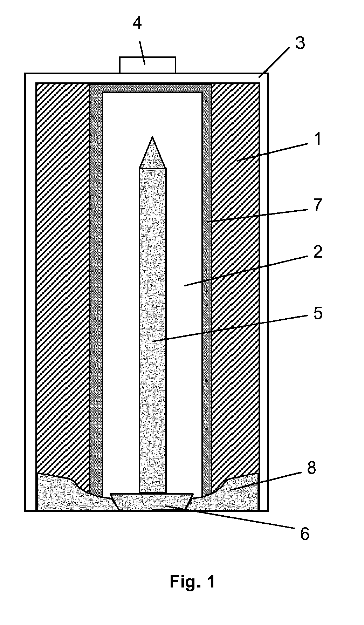

**Figure 1** is a schematic drawing showing a cross-section of an alkaline battery.

### DESCRIPTION OF EMBODIMENTS

The invention will now be described in more detail without limitation in the following description.

The invention makes use of a polyamide composition based on PA X.Y, where X is an integer from 4 to 18 (preferably 5 to 12) and Y is an integer from 10 to 18.

Preferably, use is made of PA6.10, PA 6.12 (polyhexamethylene dodecanamide) or of PA 10.12 (polydecamethylene dodecanamide).

The PA X.Y used for the invention should be crystalline at ambient temperature and should preferably have a relatively high melting point.

Mixtures of several of the above PA X.Y can also be used (for instance a mixture of PA 6.12 and of PA 10.12).

In addition to the above PA X.Y, the polyamide composition comprises a nucleating agent such as talc. The weight proportion of talc in the (total) composition may notably be: from 0.01 to 0.1 %; or from 0.1 to 0.2%; or from 0.2 to 0.3%; or from 0.3 to 0.4%; or from 0.4 to 0.5%; or from 0.5 to 0.6%; or from 0.6 to 0.7%; or from 0.7 to 0.8%; or from 0.8 to 0.9%; or from 0.9 to 1.0%.

Above 1% of talc, mechanical properties of the composition may be affected.

More generally, the nucleating agent may be:
- an inorganic nucleating agent such as *e.g.* a metal oxide, metallic particles, silica, alumina, clay or talc;
- an organic nucleating agent such as an additional polyamide having a melting temperature (Tf₂) above the melting temperature (Tf₁) of the polyamide PA X.Y to be nucleated, in particular a melting temperature Tf₂ > Tf₁ + 20°C, PA 6.6 or polyphtalamides being preferred;
- a mixture of the above.

A nucleating agent is a substance able to induce nucleation of fine polymeric (polyamide) crystals.

If the above additional polyamide is present, the weight proportion of said additional polyamide in the (total) composition is from 1 to 10%, in particular from 1 to 5%.

Advantageously, when a mixture of talc and an additional polyamide is used as a nucleating agent, the weight proportion of talc in the (total) composition is from 0.1 to 0.3%, in particular approximately 0.2%, and the weight proportion of the additional polyamide is from 1 to 10%, in particular from 1 to 5%.

It must be noted that the nucleating agent can be added during the polymerization process for making the PA X.Y, or alternatively when compounding the composition.

Advantageously, the polyamide composition comprises a release agent which aims at reducing adhesion of the composition to the mold (in the context of injection molding). The release agent can in particular be an amorphous wax, such as beeswax, a silicone wax, a polyethylene wax, an oxidized polyethylene wax, an ethylene copolymer wax, a montan wax and a polyether wax.

The weight proportion of release agent in the (total) composition may notably be: from 0.01 to 0.1 %; or from 0.1 to 0.2%; or from 0.2 to 0.3%; or from 0.3 to 0.4%; or from 0.4 to 0.5%; or from 0.5 to 0.6%; or from 0.6 to 0.7%; or from 0.7 to 0.8%; or from 0.8 to 0.9%; or from 0.9 to 1.0%; or from 1.0 to 1.1 %; or from 1.1 to 1.2%; or from 1.2 to 1.3%; or from 1.3 to 1.4%; or from 1.4 to 1.5%; or from 1.5 to 1.6%; or from 1.6 to 1.7%; or from 1.7 to 1.8%; or from 1.8 to 1.9%; or from 1.9 to 2.0%.

According to one preferred embodiment, the polyamide composition comprises the above PA X.Y as the sole polyamide component in the composition, possibly together with an additional polyamide used as the nucleating agent (or as part of the nucleating agent). Alternatively, one or more further polyamide compounds may be included in the composition in addition to those. The weight proportion of PA X.Y in the (total) composition is at least 70%, preferably at least 75% or at least 80% or at least 85% or at least 90% or at least 95% or at least 98%.

The further polyamides, if present, can be amorphous polyamides. They can be selected from PA 11 and PA 12. Copolyamides may also be used.

Other possible additives can be present, such as:
- stabilizers such as antioxidants, in particular the Irganox® ones, such as Irganox® 1098, Irganox® 610 or Irganox® 245, or phosphite or hypophosphite compounds;
- fillers such as glass fibers;
- catalyzers;
- anti-foaming agents;
- a monofunctional chain-stopping compound such as lauric acid, stearic acid, benzoic acid, acetic acid, in particular acetic acid; or
- a bifunctional chain-stopping such as an excess of diacid Y used for the formulation of the polymer, e.g. dodecanedioic acid (DC 12).

The polyamide composition used in the invention may be prepared by compounding the PA X.Y with the nucleating agent, optionally the release agent as well as other optional components. The composition is usually recovered in the form of pellets or granules.

The above polyamide composition is used for making a battery gasket. The battery may be any type of battery, but preferably a primary battery (as opposed to a secondary, rechargeable battery). Preferably, it is a battery for household use, in particular a single-cell battery having a cylindrical form and commonly known as a *"round battery".* It preferably has a nominal voltage of from 0.5 to 10 V, more preferably of approximately 1.5 V.

Batteries commonly designated as AAA, AA, C and D are especially appropriate. Various battery chemistries are possible. Alkaline batteries are preferred.

For instance, based on the IEC 60086 standards, the AAA batteries may be LR03 (alkaline), R03 (carbon-zinc), FR03 (Li-FeS₂), HR03 (NiMH), KR03 (NiCd) or ZR03 (NiOOH); the AA batteries may be LR6 (alkaline), R6 (carbon-zinc), FR6 (Li-FeS₂), HR6 (NiMH), KR6 (NiCd) or ZR6 (NiOOH); the C batteries may be LR14 (alkaline), R14 (carbon-zinc), HR14 (NiMH), KR14 (NiCd) or ZR14 (NiOOH); and the D batteries may be LR20 (alkaline), R20 (carbon-zinc), HR20 (NiMH), KR20 (NiCd) or ZR20 (NiOOH).

By way of example, and making reference to **Fig. 1****,** a round battery may comprise a peripheral cathode compartment 1 and a central anode compartment 2. The cathode compartment 1 may e.g. comprise a compressed paste of manganese dioxide with carbon powder added. The paste may be pressed into the battery or deposited as pre-molded rings. The anode compartment 2 may e.g. comprise a dispersion of zinc powder in a gel containing a potassium hydroxide electrolyte.

The outer casing of the battery comprises a steel can 3 which acts as a cathode collector and is in contact with the cathode compartment 1. It is electrically connected to a cathode cup 4 located at one (top) extremity of the cylindrical battery and acting as a cathode terminal.

An anode collector 5 in the shape of a metallic nail is disposed centrally in the anode compartment 2. It is electrically connected to an anode terminal 6 located at the (bottom) extremity of the cylindrical battery which is opposite the cathode cup 4.

The cathode compartment 1 is separated from the anode compartment 2 owing to a separator 7, which prevents mixing of the anode and cathode materials and short-circuiting of the cell. The separator 7 can be made of a nonwoven layer of cellulose or a synthetic polymer soaked with the electrolyte (e.g. potassium hydroxide).

The battery gasket 8 is located at the bottom extremity of the battery. It is annularly shaped and arranged around the anode terminal 6, thus ensuring a proper sealing of the battery.

The battery gasket can be manufactured by injection molding. Injection molding consists of high pressure injection of the raw material (polyamide composition) into a mold which shapes it into the desired shape.

The polyamide composition is preferably provided in a pelletized form. It is fed through a hopper into a heated barrel with a reciprocating screw. The screw delivers the raw material forward, up through a check valve. The melted material is collected at the front of the screw. It is then forced at high pressure and velocity into the mold. The molded part is cooled. The polyamide recrystallizes during the cooling time.

### EXAMPLES

The following examples illustrate the invention without limiting it.

### Example 1: polymerization process

In a reactor the following components are introduced under stirring:
22.06 kg dodecanedioic acid;
11.07 kg hexamethylenediamine;
103.13 g acetic acid;
2 kg water; and
1.32 g antifoaming agent (silicone oil).

The reactor is progressively heated under stirring until the inside temperature reaches 240°C, while the water formed is eliminated in order to maintain an internal pressure of 14 bar.

The internal pressure of the reactor is reduced to atmospheric pressure during 1 hour and then nitrogen flushing is performed until the required viscosity is reached.

### Example 2 - crystallization experiments

The crystallization kinetics of PA 6.12 was investigated by differential scanning calorimetry (DSC).

The results are summarized in table 1 below.

**Table 1**

| **Polyamide composition** | **Crystallization temperature T_{c}** | **Time until reach half-crystallization at T_{f}**-**13°C** |
|---|---|---|
| A | 186°C | 15 min |
| A + 0.5 wt.% talc | 189°C | 4 min |
| B | 188°C | 9 min |
| C + 0.5 wt.% talc | 190°C | 4 min |

Compositions A and C were two different compositions based on PA 6.12 produced by Arkema. Composition A was in the form of an extruded strand and composition C was in the form of granules. Composition B was a PA 6.12 formulation available on the market (PA6.12 granules from DuPont).

Talc was added to composition A at the compounding stage.

Talc was added to composition C at the polymerization stage.

The gross inherent viscosity of composition A was 1.17-1.18, while its corrected inherent viscosity was 1.17-1.18. By way of comparison, the gross inherent viscosity of composition A + 0.5% talc was 1.12-1.13, while its corrected inherent viscosity was 1.13-1.14. The viscosity of the composition was therefore hardly affected by the addition of talc.

The melting point of composition C was 190°C. It was unaffected by the addition of 0.5% talc. The duration of an injection molding cycle for making a battery gasket using composition B was 15 s. This duration was reduced to 3 s by the addition of 0.5% talc.

### Example 3 - mechanical properties

Various mechanical properties of PA 6.12 were investigated based on the ISO 178 flexure properties test (flexure modulus and maximum strength) as well as on the ISO 527 tensile properties test (tensile modulus, stress at yield, elongation at yield, stress at break, elongation at break and tensile strength). The results are summarized in table 2 below.

**Table 2**

| **Formula** | **Flex. modulus (MPa)** | **Max. strength (MPa)** | **Tens. modulus (MPa)** | **Stress at yield (MPa)** | **Elong. at yield (%)** | **Stress at break (MPa)** | **Elong. at break (%)** | **Tens. strength (MPa)** |
|---|---|---|---|---|---|---|---|---|
| E | 2000 ± 1 | 85 ± 1 | 2801 ± 210 | 65 ± 1 | 13 ± 1 | 47 ± 10 | 20 ± 3 | 65 ± 1 |
| E + talc | 2120 ± 87 | 87 ± 1 | 3063 ± 176 | 67 ± 1 | 10 ± 1 | 57 ± 1 | 14 ± 2 | 67 ± 1 |
| F | 2060 ± 55 | 87 ± 1 | 2785 ± 285 | 66 ± 1 | 11 ± 1 | 52 ± 7 | 17 ± 2 | 66 ± 1 |
| F + talc | 2000 ± 100 | 84 ± 3 | 2780 ± 73 | 68 ± 1 | 11 ± 1 | 60 ± 2 | 16 ± 1 | 68 ± 1 |

Compositions E and F were two different PA 6.12 compositions:
- composition E: PA 6.12 + 0.18% acetic acid + 0.4% dodecanedioic acid;
- composition F: PA 6.12 + 0.25% acetic acid + 0.4% dodecanedioic acid.

Both compositions also comprised 0.2 wt.% of Luwax® E as a release agent. The addition of talc was performed in an amount of 0.2 wt.% on a pilot scale.

The above results demonstrate that relevant mechanical properties are hardly affected by the addition of talc.

### Exemple 4 - Injection

The process ability of PA 6.12 during injection was evaluated. Composition G according of this invention was : PA 6.12 + 0.25% acetic acid + 0.4% dodecanedioic acid. Talc (Luzenac® 10M00S) and release agent (Luwax® E) were added during compounding step at 0.2 wt. % and a composition G' was thus obtained.

Injection parameters are summarized in Table 3 below.

**Table 3**

| **Temperature profile (°C)** | | | |
|---|---|---|---|
| Nozzle | Zone 3 | Zone 2 | Zone 1 |
| 240 | 238 | 235 | 232 |
| **Injection machine** | Donghua Machinery | **Mold Temperature** | 59.6/ 61.6°C (F/M) |
| **Diameter of Screw** | 25 mm | **Injection pressure** | 47 bar |
| **Mold cavities** | 22 | **Injection speed** | 43% |
| **Screw speed** | 340 RPM | **Back pressure** | No |
| **Metering** | 50 mm | **Cooling speed** | 2.7 s |
| **Cushion** | 10 mm (Avg) | **Cycle time** | 8.2 s |

Processing conditions were adapted for injection of this formulation. It means that no demolding or deformation issues were observed. An advantage of the present invention was the short cycle time around 8.2 seconds. Compared to another PA 6.12 formulation without talc or release agent, cycle time can be higher than 15 seconds.

Short cycle time is directly associated with crystallization temperature. In fact, without talc or release agent, crystallization temperature of the base resin (Composition G) was 188.5°C. After compounding step to get Composition G', crystallization temperature was increased to 195°C.
Furthermore, appearance of the molded gaskets was satisfactory. No obvious defects like holes, bubbles or central hole blocking were observed.

### Example 5 : Metal needle punching test

Battery gasket molded with Composition G' following injection parameters cited in Table 3 (see example 4), was submitted to a metal needle punching test. The diameter of the needle used for this test was 1.35 mm. Before evaluation, injected parts were conditioned in 70°C hot water for 2 hours and then dried by air blowing.

The goal is to check the toughness of the parts by punching a needle with a needle punching machine into the central hole of the gasket. No cracking must be observed after the metal needle had been punched. Thus, no leakage will be possible after assembly the gasket with battery.

Seventy (70) conditioned parts were tested and no cracking was observed.

### Example 6 : Burst pressure test

Metal needle punching test explained in the previous example, is a preparation for burst pressure test. In fact, the needle punched part is put in burst pressure test machine to check the burst pressure limits.

During burst pressure test, pressurized air goes from down to top. There is a safety window in the molded gasket that can not be broken once the internal pressure reaches a certain level. According to standard evaluation, burst pressure required for LR6 battery is between 700 to 1300 psi. The most important is to keep the results variation for a given cavity lower than 100 psi.

There is a cavity number on each needle punched part. Three samples (needle punched part molded with Composition G') from each cavity were selected randomly and the burst pressure tested with the machine. Table 4 below summarizes burst pressure results.

**Table 4**

| **Cavity** | **1^{st} sample (psi)** | **2^{nd} sample (psi)** | **3^{rd} sample (psi)** | **Data gap** |
|---|---|---|---|---|
| 1^{a} | / | / | / | / |
| 2 | 1246 | 1282 | 1239 | 43 |
| 3 | 1058 | 1114 | 1073 | 56 |
| 4 | 1106 | 1109 | 1107 | 3 |
| 5 | 1072 | 1113 | 1057 | 56 |
| 6 | 969 | 974 | 926 | 48 |
| 7 | 987 | 954 | 950 | 37 |
| 8 | 1249 | 1277 | 1247 | 30 |
| 9 | 723 | 748 | 747 | 25 |
| 10 | 1167 | 1192 | 1198 | 31 |
| 11 | 1265 | 1237 | 1249 | 28 |
| 12 | 1020 | 1028 | 1036 | 16 |
| 13 | 1006 | 996 | 1055 | 59 |
| 14 | 984 | 1004 | 940 | 64 |
| 15 | 1015 | 1066 | 1009 | 57 |
| 16 | 1204 | 1255 | 1173 | 82 |
| 17 | 1036 | 1070 | 1065 | 34 |
| 18 | 1141 | 1163 | 1105 | 58 |
| 19 | 1241 | 1227 | 1201 | 40 |
| 20 | 789 | 790 | 780 | 10 |
| 21 | 1203 | 1186 | 1230 | 44 |
| 22 | 1107 | 1116 | 1137 | 30 |
| **Requirement** | | | | **Requirement** |
| Burst pressure should be in the range of 700 ∼ 1300 psi | | | | Gap < 100 psi |

| | | | | |
|---|---|---|---|---|
| ^{a} The 1^{st} cavity was closed. | | | | |

Results showed that for each three sample from the same cavity, the burst pressure was stable and the gap was less than 100 psi.

## Claims

1. A gasket for a battery, wherein the gasket is made from a polyamide composition comprising at least 70 wt.% of a polyamide X.Y, wherein X and Y represent respective residues from the condensation of an aliphatic diamine comprising 4 to 18 carbon atoms, and preferably 5 to 12 carbon atoms, with a (cyclo)aliphatic diacid comprising 10 to 18 carbon atoms, and wherein the polyamide composition further comprises a nucleating agent.

2. The gasket of claim 1, wherein X +Y>12.

3. The gasket of claim 1 or 2, wherein the polyamide X.Y is polyamide 6.10, 6.12 or polyamide 10.12.

4. The gasket of one of claims 1 to 3, wherein the polyamide composition further comprises a release agent, which is preferably an amorphous wax.

5. The gasket of one of claims 1 to 4, wherein the polyamide composition comprises at least 75 wt.%, preferably at least 80 wt.% or at least 85 wt.% or at least 90 wt.% or at least 95 wt.% or at least 98 wt.% of the polyamide X.Y.

6. The gasket of one of claims 1 to 5, wherein the nucleating agent is selected from:
- an inorganic nucleating agent such as *e.g.* a metal oxide, metallic particles, silica, alumina, clay or talc;
- an organic nucleating agent such as an additional polyamide having a melting temperature (Tf₂) above the melting temperature (Tf₁) of the polyamide PA X.Y to be nucleated, in particular a melting temperature Tf₂ > Tf₁ + 20°C, PA 6.6 or polyphtalamides being preferred; or
- a mixture of the above.

7. The gasket of one of claims 1 to 6, wherein the nucleating agent comprises talc or consists of talc.

8. The gasket of claim 7, wherein the amount of talc in the polyamide composition is from 0.05 wt.% to 1 wt.%, preferably from 0.1 wt.% to 0.5 wt.%, and more preferably from 0.1 to 0.3 wt.%, in particular approximately 0.2%.

9. A process of making a gasket for a battery, comprising the injection molding of a polyamide composition comprising at least 70 wt.% of a polyamide X.Y, wherein X and Y represent respective residues from the condensation of an aliphatic diamine comprising 4 to 18 carbon atoms, and preferably 5 to 12 carbon atoms, with a (cyclo)aliphatic diacid comprising 10 to 18 carbon atoms, and wherein the polyamide composition further comprises a nucleating agent, preferably talc.

10. The process of claim 9, wherein the polyamide composition is as described in one of claims 2 to 8.

11. The use of a nucleating agent, the nucleating agent preferably being talc, for accelerating the crystallization of a polyamide composition in a process of making a gasket for a battery, wherein the polyamide composition comprises at least 70 wt.% of a polyamide X.Y, X and Y representing respective residues from the condensation of an aliphatic diamine comprising 4 to 18 carbon atoms, and preferably 5 to 12 carbon atoms, with a (cyclo)aliphatic diacid comprising 10 to 18 carbon atoms.

12. The use of claim 11, wherein the polyamide composition is as described in one of claims 2 to 8.

13. A battery comprising the gasket of one of claims 1 to 8.

14. The battery of claim 13, which is an alkaline battery.
